# EUROPEAN PATENT APPLICATION

(11) **EP 4 564 497 A1**
(43) Date of publication of application: **04.06.2025**
(21) Application number: 23890157.3
(22) Date of filing: 16.06.2023
(51) Int. Cl.: H01M 10/04, B23K 37/04, H01M 50/169

(54) **DEVIATION CORRECTION DEVICE AND PROCESSING APPARATUS FOR CYLINDRICAL BATTERY**

(30) Priority: 18.11.2022 CN 202211445919
(71) Applicant: Jiangsu Contemporary Amperex Technology Limited, Changzhou, Jiangsu 213300 (CN)
(72) Inventor: SHAN, Xintong, hangzhou, Jiangsu 213300 (CN); WANG, Jisong, hangzhou, Jiangsu 213300 (CN); JI, Hong, hangzhou, Jiangsu 213300 (CN)
(74) Representative: Ran, Handong
(86) International application number: PCT/CN2023/100785
(87) International publication number: WO 2024/103715

(57) **Abstract**

Disclosed in the embodiments of the present application are a deviation correction device and processing apparatus for a cylindrical battery. The deviation correction device comprises a deviation correction mechanism, which is arranged on a welding station of a first end cap assembly, wherein the deviation correction mechanism is configured to correct the deviation of a combined part to which a second end cap assembly is welded, such that the first end cap assembly is welded to an electrode assembly of the corrected combined part, at the welding station of the first end cap assembly, and the combined part comprises the electrode assembly and a housing. The deviation correction device provided in the present application can effectively solve the problem of deflection of a battery cell prior to a process of an end cap assembly being welded thereto, thereby facilitating improvement of the product yield of batteries.

## Description

This application claims priority to Chinese Patent Application No. 202211445919.2, filed with the China National Intellectual Property Administration on November 18, 2022 and entitled "DEVIATION CORRECTION DEVICE AND PROCESSING APPARATUS FOR CYLINDRICAL BATTERY", which is incorporated herein by reference in its entirety.

### TECHNICAL FIELD

This application relates to the field of batteries, and more specifically, to a deviation correction device and a processing apparatus for cylindrical batteries.

### BACKGROUND

In recent years, batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace, leading to significant development.

During the transportation process of battery cells after one end cover assembly is welded and before another end cover assembly is welded, deviation easily occurs, making it difficult to align the two end cover assemblies, which can easily cause poor contact of the battery cells or lead to crushing of the end cover in subsequent covering processes, ultimately resulting in low product yield rate. Therefore, how to improve the product yield rate of battery cells in production has become an urgent problem to be solved.

### SUMMARY

Embodiments of this application provide a deviation correction device and processing apparatus for cylindrical batteries, which can effectively solve the problem of angular deviation of a second end cover assembly and an electrode assembly during the process of welding the second end cover assembly in battery cell processing, thereby improving the product yield rate of battery cells.

According to a first aspect, a deviation correction device for a cylindrical battery is provided, where the deviation correction device includes: a deviation correction mechanism, where the deviation correction mechanism is disposed at a welding station of a first end cover assembly, and the deviation correction mechanism is configured to correct a deviation of a combined member welded with a second end cover assembly, so that the first end cover assembly is welded to an electrode assembly of the combined member, for which the deviation has been corrected, at the welding station of the first end cover assembly, where the combined member includes the electrode assembly and a housing.

It should be understood that the combined member mentioned above is a battery cell in the processing stage, which has a housing and an electrode assembly disposed in the housing, and neither the first end cover assembly nor the second end cover assembly is welded to the combined member. The second end cover assembly is an end cover assembly that is first welded to the electrode assembly, and the first end cover assembly is an end cover assembly that is subsequently welded to the electrode assembly. In other words, during the processing of a battery cell, it is first transported to the welding station of the second end cover assembly and then to the welding station of the first end cover assembly. The deviation correction mechanism is a device disposed at the welding station of the first end cover assembly and can correct a deviation of the combined member transported to the welding station of the first end cover assembly. After the deviation correction is completed, the first end cover assembly is welded to the electrode assembly.

In the embodiments of this application, a deviation correction mechanism is directly disposed at the welding station of the first end cover assembly to correct the deviation of the combined member transported to the welding station. After the deviation of the combined member is corrected, the combined member does not need to be transferred again but is welded with the first end cover assembly at the welding station. This improves the situation where misalignment occurs between the first end cover assembly and the second end cover assembly during welding due to the deviation of the combined member during transfer, thereby reducing the probability of crushing the end cover in subsequent covering processes and helping to improve the product yield rate of battery cells.

In some embodiments, the deviation correction mechanism corrects the deviation of the combined member by correcting a deviation of the second end cover assembly.

In the embodiments of this application, since the combined member arriving at the deviation correction mechanism has already been welded with the second end cover assembly, the deviation correction mechanism can correct the deviation of the combined member by correcting the deviation of the second end cover assembly. This method, compared with directly correcting the deviation of the combined member, does not involve direct contact between the deviation correction mechanism and the combined member, avoiding damage to the combined member during the deviation correction process.

In some embodiments, the deviation correction device includes: a moving mechanism, where the deviation correction mechanism is disposed on the moving mechanism, and the moving mechanism is configured to reposition the deviation correction mechanism at the welding station of the first end cover assembly.

In the embodiments of this application, through the provision of the moving mechanism in the deviation correction device, the position of the deviation correction mechanism at the welding station of the first end cover can be flexibly adjusted, so that the deviation correction mechanism moves to the position of the second end cover assembly when deviation correction is needed and moves to another position when deviation correction is not needed, thereby avoiding scratches to the second end cover assembly or the combined member by the deviation correction mechanism.

In some embodiments, the deviation correction device includes: a fixing mechanism, where the moving mechanism is disposed on the fixing mechanism, and the fixing mechanism is configured to fix the deviation correction mechanism to the welding station of the first end cover assembly.

In some embodiments, the deviation correction mechanism includes a first clamping portion and a second clamping portion, where the first clamping portion is disposed opposite the second clamping portion.

In some embodiments, the first clamping portion includes a first V-shaped notch; and the second clamping portion includes a second V-shaped notch, the first V-shaped notch being disposed opposite the second V-shaped notch; where the first V-shaped notch and the second V-shaped notch are configured to move relative to each other to fix the second end cover assembly between the first V-shaped notch and the second V-shaped notch.

In the embodiments of this application, through the moving of the two V-shaped notches relative to each other, the deviation correction mechanism fixes the second end cover assembly between the two V-shaped notches, so that the second end cover assembly can be aligned with the first end cover assembly. Thus, deviation correction of the battery cell is implemented by deviation correction of the second end cover assembly. The contact area between the two V-shaped notches and the second end cover assembly is small, which can achieve the deviation correction effect while minimizing the possibility of deformation of the second end cover assembly caused by the deviation correction mechanism when the deviation correction mechanism fixes the second end cover assembly.

In some embodiments, the second end cover assembly has a folded portion, a welding portion, and a connecting portion, where the welding portion is configured to be welded to the combined member, and the connecting portion is configured to connect the folded portion to the welding portion; and the first V-shaped notch and the second V-shaped notch are configured to move relative to each other to clamp the connecting portion, so that the first end cover assembly 231 and the second end cover assembly 232 are aligned.

In the embodiments of this application, the deviation correction mechanism corrects the deviation of the combined member by fixing the connecting portion of the second end cover assembly. Since the connecting portion of the second end cover assembly usually has high mechanical strength, this can further reduce the possibility of deformation of the second end cover assembly caused by the deviation correction mechanism during deviation correction, helping to further improve the product yield rate of the battery cell.

In some embodiments, an included angle of the first V-shaped notch and/or the second V-shaped notch is 110° to 130°, preferably 121°.

In the embodiments of this application, through the setting of the included angle of the V-shaped notch within an appropriate range, combined members with deviations in a relatively large angle range can be corrected, effectively improving the effect of deviation correction of the combined member. The included angle range may be set according to factors such as deviation angles of combined members and the transport path of the combined members in the actual production process.

In some embodiments, roughness of a surface of the first V-shaped notch in contact with the second end cover assembly is smaller than roughness of another surface of the first V-shaped notch; and/or roughness of a surface of the second V-shaped notch in contact with the second end cover assembly is smaller than roughness of another surface of the second V-shaped notch.

In the embodiments of this application, through the increasing of smoothness of the surface of the V-shaped notch in contact with the second end cover assembly, a friction force between the second end cover assembly and the V-shaped notch during the fixing process can be avoid reduced, thereby effectively reducing the possibility of deformation of the second end cover assembly during the deviation correction process.

In some embodiments, the moving mechanism includes: a first moving module, where the first moving module is connected to the deviation correction mechanism, and the first moving module is configured to move in a first direction so that the first V-shaped notch and the second V-shaped notch move relative to each other, where the first direction is a direction along which the combined member is transported.

In some embodiments, the moving mechanism includes: a second moving module, where the second moving module is connected to the first moving module, and the second moving module is configured to move in the first direction to control a position of the first moving module in the first direction.

In some embodiments, the moving mechanism includes: a third moving module, where the third moving module is connected to the second moving module, and the third moving module is configured to move in a second direction to control a position of the second moving module in the second direction, the second direction being perpendicular to the first direction.

In some embodiments, the moving mechanism includes: a fourth moving module, where the fourth moving module is connected to the third moving module, and the fourth moving module is configured to move in a third direction to control a position of the third moving module in the third direction, the third direction being perpendicular to both the first direction and the second direction.

In the embodiments of this application, the second moving module, third moving module, and fourth moving module of the moving mechanism can respectively control the position of the deviation correction mechanism in the first direction, second direction, and third direction, thereby implementing multi-directional adjustment of the deviation correction mechanism at the welding station of the first end cover assembly. This allows the deviation correction mechanism to accurately control the corresponding position of the second end cover assembly, effectively improving the deviation correction effect and the flexibility of the deviation correction device.

In some embodiments, the third moving module includes a cylinder structure, where the cylinder structure is provided with a limiting portion, and the limiting portion is configured to control a maximum distance a cylinder moves in the second direction.

In the embodiments of this application, the third moving module adopts the form of a cylinder, and the limiting portion limits the maximum distance the cylinder moves in the second direction, which allows quick moving of the deviation correction mechanism to the required position in the second direction.

In some embodiments, the deviation correction device includes: a control mechanism, where the control mechanism is connected to the moving mechanism.

In some embodiments, the control mechanism includes: a pressure regulating valve, where the pressure regulating valve is configured to adjust a pressure between the first V-shaped notch and the second V-shaped notch and the second end cover assembly when the first V-shaped notch and the second V-shaped notch are fixing the second end cover assembly.

In the embodiments of this application, a pressure regulating valve of the control mechanism controls the pressure applied by the V-shaped notch when the V-shaped notch clamps the second end cover assembly, preventing the V-shaped notch from causing deformation of the second end cover assembly due to excessive pressure when clamping the second end cover assembly, and allowing the deviation correction device to help improve the product yield rate of the battery cell while correcting the deviation.

According to a second aspect, a processing apparatus is provided, and the processing apparatus includes: a first welding device, configured to weld the first end cover assembly at the welding station of the first end cover assembly; and the deviation correction device in any embodiment of the first aspect, configured to correct the deviation of the combined member at the welding station of the first end cover assembly, where the combined member includes the electrode assembly and the housing.

In some embodiments, the processing apparatus includes: a second welding device, configured to weld the second end cover assembly at the welding station of the second end cover assembly; and a transport device, configured to transport the combined member to the welding station of the second end cover assembly and the welding station of the first end cover assembly in sequence.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to this application.
FIG. 2 is a schematic structural diagram of a battery according to this application.
FIG. 3 is a schematic structural diagram of a battery cell according to this application.
FIG. 4 is a schematic structural diagram of a deviation correction device according to this application.
FIG. 5 is a partial schematic diagram of a deviation correction device according to this application.
FIG. 6 is a schematic structural diagram of an end cover assembly according to this application.
FIG. 7 is another schematic structural diagram of a deviation correction device according to this application.
FIG. 8 is a schematic diagram of a V-shaped notch according to this application.
FIG. 9 is another schematic diagram of a deviation correction device according to this application.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "include", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

For the development of battery technology, many design factors need to be considered, for example, performance parameters such as energy density, cycle life, discharge capacity, and charge and discharge rate. Additionally, it is also necessary to consider the production and processing techniques of batteries to improve production efficiency and product yield rate of batteries.

During the processing of cylindrical battery cells, the electrode assembly is usually placed into a housing with openings at both ends to form a combined member. After an end cover assembly is welded at one end of the combined member, another end cover assembly is welded at the other end. After the housing is covered, an electrolyte is injected into the housing, and the housing is sealed to form a final battery cell. In this application, a housing placed with an electrode assembly is also referred to as a combined member for short. Since the housing of a cylindrical battery is cylindrical, multiple other processes are usually set up between welding the two end cover assemblies, causing the combined member to easily deviate at different angles during its transportation to the processing station of the second end cover assembly. The deviation of the combined member will cause misalignment between the second end cover assembly, after being welded with the electrode assembly, and the first end cover assembly, resulting in crushing of the end cover assemblies during the covering process, leading to the scrapping of the produced battery cell, and affecting the product yield rate of the battery cell.

In view of this, embodiments of this application provide a deviation correction device and a processing apparatus for cylindrical batteries. The deviation correction device is directly disposed at the welding station of the subsequently welded end cover assembly, so that after the deviation correction of the combined member is completed, it does not need to be transferred again but directly proceeds to the welding of the latter end cover assembly. This significantly reduces the probability of misalignment between the first and second end cover assemblies, effectively alleviates the problem of battery cell scrapping caused by the deviation of the combined member, and helps improve the product yield rate of the battery.

The technical solutions described in the embodiments of this application are applicable to processing batteries used in any electric device.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For brevity of description, the following embodiments are all described by taking an electric vehicle as an example.

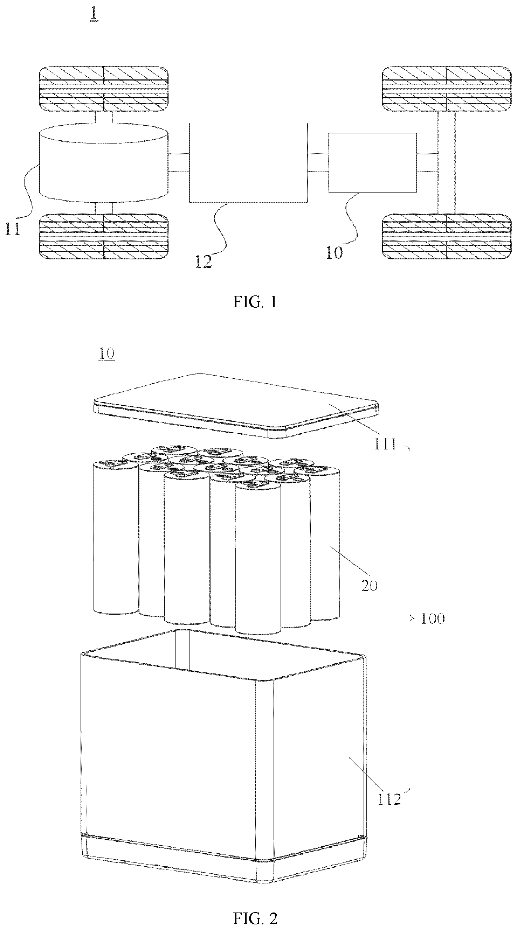

For example, FIG. 1 is a schematic structural diagram of a vehicle 1 according to this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first combined into battery modules that are then combined into a battery.

For example, FIG. 2 is a schematic structural diagram of a battery 10 according to this application. The battery 10 may include a plurality of battery cells 20. The battery 10 may further include a box 100 (or referred to as a cover), where the box 100 has a hollow structure inside, and the plurality of battery cells 20 are accommodated in the box 100. As shown in FIG. 2, the box 100 may include two portions which are referred to herein as a first portion 111 and a second portion 112 respectively, and the first portion 111 and the second portion 112 are snap-fitted together. Shapes of the first portion 111 and the second portion 112 may be determined according to a shape of the combined plurality of battery cells 20, and the first portion 111 and the second portion 112 each may have an opening. For example, the first portion 111 and the second portion 112 each may be a hollow cuboid and have only one face with an opening, the opening of the first portion 111 is disposed opposite the opening of the second portion 112, and the first portion 111 and the second portion 112 are snap-fitted to form a box 100 with an enclosed chamber. The plurality of battery cells 20 are connected in parallel, series, or series-parallel and then placed into the box 100 formed after the first portion 111 and the second portion 112 are snap-fitted.

Optionally, the battery 10 may further include other structures. Details are not described herein again. For example, the battery 10 may further include a busbar that is used to implement electrical connection between the plurality of battery cells 20, for example, in a parallel, series, or series-parallel manner. Specifically, the busbar may implement the electrical connection between the battery cells 20 by connecting electrode terminals of the battery cells 20. Further, the busbar may be fixed to the electrode terminals of battery cells 20 by welding. Electrical energy of the plurality of battery cells 20 may be further led out through the box 100 by a conductive mechanism. Optionally, the conductive mechanism may also belong to the busbar.

Based on different power demands, battery cells 20 can be set in any quantity. The plurality of battery cells 20 may be connected in series, parallel, or series-parallel to achieve large capacity or power.

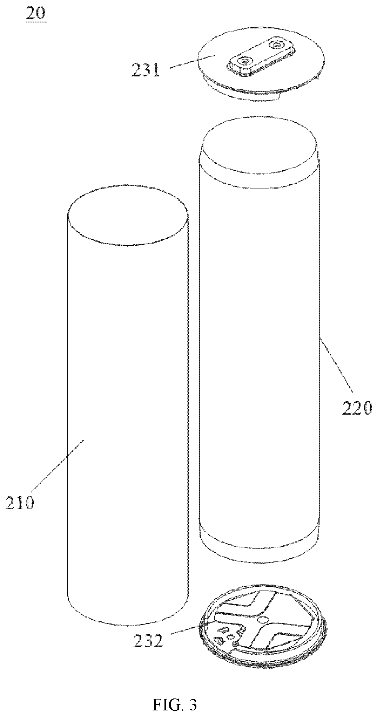

For description, the following mainly uses the cylindrical battery cell 20 shown in FIG. 3 as an example. However, it should be understood that the battery cell of the embodiments of this application may be a cylindrical battery cell, a prismatic battery cell, or a blade battery cell.

FIG. 3 is a schematic structural diagram of a battery cell 20 according to an embodiment of this application. As shown in FIG. 3, the battery cell 20 may include a housing 210, an electrode assembly 220, a first end cover assembly 231, and a second end cover assembly 232. The combined member includes the housing 210 and the electrode assembly 220. The housing 210, the first end cover assembly 231, and the second end cover assembly 232 form a shell or battery case. The wall of the housing 210, and the walls of the first end cover assembly 231 and the second end cover assembly 232 are all referred to as the wall of the battery cell 20. As can be seen from FIG. 3, the cylindrical battery cell 20 has two circular end faces and a column connecting the two circular end faces. The column portion may include the electrode assembly 220. The end cover assemblies cover the openings and join the housing 210 to form an enclosed cavity for accommodating the electrode assembly 220. The housing 210 is filled with an electrolyte, for example, a liquid electrolyte.

The electrode assembly 220 includes a positive electrode plate, a negative electrode plate, and a separator. In addition, the electrode assembly 220 may be a wound structure or a laminated structure, and the embodiments of this application are not limited thereto.

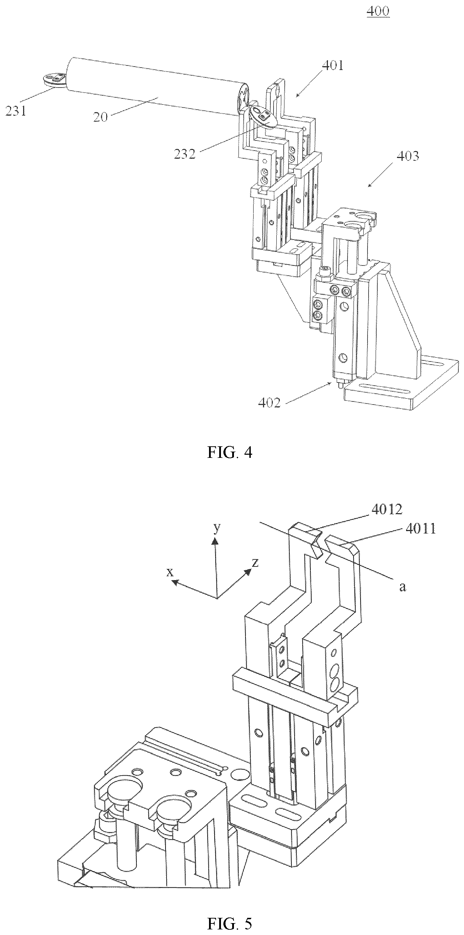

FIG. 4 is a schematic structural diagram of a deviation correction device according to an embodiment of this application. As shown in FIG. 4, the deviation correction device 400 includes a deviation correction mechanism 401.

The deviation correction mechanism 401 is disposed at a welding station of a first end cover assembly 231, and the deviation correction mechanism 401 is configured to correct a deviation of a combined member welded with a second end cover assembly 232, so that the first end cover assembly 231 is welded to the combined member, for which the deviation has been corrected, at the welding station of the first end cover assembly 231, where the combined member includes a housing 210 and the electrode assembly 220.

Specifically, referring to FIG. 3 and FIG. 4, in the actual production process, the electrode assembly 220 is first placed in the housing 210 to form a combined member with open ends. Then, the second end cover assembly 232 is welded to one end of the electrode assembly 220 at the welding station of the second end cover assembly 232. Finally, the first end cover assembly 231 is welded to another end of the electrode assembly 220 at the welding station of the first end cover assembly 231. Between the welding of the second end cover assembly 232 and the welding of the first end cover assembly 231, there are usually other process steps such as folding the second end cover assembly 232. Therefore, the combined member is usually transferred and transported between different processing stations in a stepwise manner, linear manner, and the like. During the transportation or transfer process of the combined member, the cylindrical housing 210 inevitably causes the combined member to deviate, resulting in misalignment between the first end cover assembly 231 and the second end cover assembly after welding.

In the above embodiment, the deviation correction mechanism 410 of the deviation correction device is directly disposed at the welding station of the first end cover assembly 231, making the deviation correction of the combined member the last process step before welding the first end cover assembly 231 to the electrode assembly 220. After the deviation correction of the combined member is completed, the combined member welded with the second end cover assembly 232 does not need to be transferred or transported; the welding of the first end cover assembly 231 is completed directly at the welding station of the first end cover assembly 231. This effectively alleviates the misalignment between the first end cover assembly 231 and the second end cover assembly 232 after welding due to the deviation of the combined member during transfer, improving the quality of the battery cell 20 while increasing the product yield rate of the battery cell 20.

In one embodiment, the deviation correction mechanism 401 combines member by correcting a deviation of the second end cover assembly 232.

Specifically, the deviation correction mechanism 401 corrects the deviation of the second end cover assembly 232 that has already been welded to the electrode assembly 220. Since the second end cover assembly 232 is already welded to the electrode assembly 220, correcting the deviation of the second end cover assembly 232 simultaneously drives the electrode assembly 220, thereby implementing the correction of the deviation of the combined member.

In this embodiment, the deviation of the combined member is indirectly corrected by correcting the deviation of the second end cover assembly 232. Compared with directly correcting the deviation of the combined member by using the deviation correction mechanism 401, this method avoids direct contact between the deviation correction mechanism 401 and the combined member. The housing 210 is more susceptible to deformation by external forces than the end cover assembly 232, therefore indirect deviation correction can effectively reduce damage to the housing 210 during the deviation correction process, thus improving product yield rate.

In one embodiment, as shown in FIG. 4, the deviation correction device 400 includes: a fixing mechanism 402, where the fixing mechanism 402 is configured to fix the deviation correction mechanism 401 to the welding station of the first end cover assembly 231.

Specifically, the fixing mechanism 402 may be in various forms such as a base, a support, or a fixing member. This is not specifically limited in the embodiments of this application.

In one embodiment, as shown in FIG. 4, the deviation correction device 400 includes: a moving mechanism 403, where the moving mechanism 403 is disposed on the fixing mechanism 402, the deviation correction mechanism 401 is disposed on the moving mechanism 403, and the moving mechanism 403 is configured to reposition the deviation correction mechanism 401 at the welding station of the first end cover assembly 231.

Specifically, the deviation correction mechanism 401 is not fixed at the welding station of the first end cover assembly 231, but can be moved to the required position at the welding station of the first end cover assembly 231 through the moving mechanism 403. Thus, the deviation correction device 400 can move the deviation correction mechanism 401 to the position of the second end cover assembly 232 when deviation correction is needed and move the deviation correction mechanism 401 to another position when deviation correction is not needed to avoid scratches to the second end cover assembly 232 or the combined member by the deviation correction mechanism 401.

In this embodiment, by moving the deviation correction mechanism 401 through the moving mechanism 403, the deviation correction device 400 can adapt to combined members of different sizes and models, thus expanding the application range of the deviation correction device 400. Through the provision of the moving mechanism 403, the deviation correction device 400 can flexibly control the position of the deviation correction mechanism 401 as needed, thus avoiding scratches to the second end cover assembly 232 or the combined member by the deviation correction mechanism 401.

In one embodiment, the deviation correction mechanism 401 includes a first clamping portion and a second clamping portion, where the first clamping portion is disposed opposite the second clamping portion.

FIG. 5 is another schematic structural diagram of a deviation correction device 400 according to an embodiment of this application.

In one embodiment, as shown in FIG. 4 or FIG. 5, the deviation correction mechanism 401 includes: a first V-shaped notch 4011 and a second V-shaped notch 4012, the first V-shaped notch 4011 is disposed opposite the second V-shaped notch 4012, and the first V-shaped notch 4011 and the second V-shaped notch 4012 are configured to move relative to each other to fix the second end cover assembly 232 between the first V-shaped notch 4011 and the second V-shaped notch 4012.

The first clamping portion and the second clamping portion adopt the form of V-shaped notches, and the first V-shaped notch 4011 and the second V-shaped notch 4012 are disposed opposite each other and able to move relative to each other. When the deviation correction mechanism 401 corrects the deviation of the combined member, the second end cover assembly 232 is transported to between the first V-shaped notch 4011 and the second V-shaped notch 4012, and the first V-shaped notch 4011 and the second V-shaped notch 4012 move relative to each other to reduce the distance between them, thereby clamping the second end cover assembly 232 located between them. After being clamped by the first V-shaped notch 4011 and the second V-shaped notch 4012, the second end cover assembly 232 will be fixed in the accommodating space formed by the two V-shaped structures.

Here, the first V-shaped notch 4011 being disposed opposite the second V-shaped notch 4012 can be understood as the first V-shaped notch 4011 being disposed opposite the second V-shaped notch 4012 in a first direction. A line a between the vertex of the first V-shaped notch 4011 and the vertex of the second V-shaped notch 4012 is parallel to the first direction x, where the first direction x is the direction in which the combined member is transported.

Generally, the combined member 220 deviates during transportation, causing the second end cover assembly 232 to deviate at a certain angle relative to the first direction x. In this embodiment, with the first clamping portion and the second clamping portion designed in the form of V-shaped notches, during the deviation correction process, the two V-shaped notches clamp the second end cover assembly 232, so that the clamped portion of the second end cover assembly 232 is parallel to the first direction x. This corrects the deviation of the second end cover assembly relative to the first direction x, allowing the first end cover assembly 231, which is about to be welded to the electrode assembly 220, to align with the corrected second end cover assembly 232. Moreover, the V-shaped notches can adapt to batteries of different sizes and models, having good compatibility. If the model of battery cell 20 to be processed needs to be temporarily changed on the production line, due to the good compatibility of the deviation correction device 400 with different models, it is not necessary to suspend the production line to adjust the deviation correction device 400 when changing the battery cell 20 model, thus helping to improve the production efficiency of the battery cell 20.

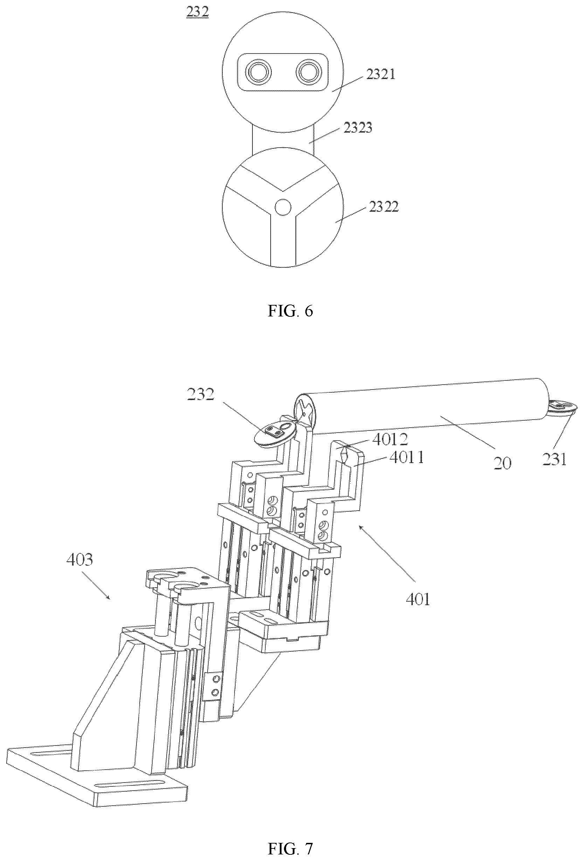

FIG. 6 is a schematic structural diagram of an end cover assembly according to an embodiment of this application. FIG. 7 is a schematic diagram showing a deviation correction mechanism 401 clamping a second end cover assembly 232 according to an embodiment of this application. In some other embodiments, the first end cover assembly 231 and the second end cover assembly 232 mentioned above are also referred to as current collector plates.

In one embodiment, as shown in FIG. 6 and FIG. 7, the second end cover assembly 232 includes a folded portion 2321, a welding portion 2322, and a connecting portion 2323. The welding portion 2322 is welded to the electrode assembly 220, and the connecting portion 2323 is configured to connect the folded portion 2321 to the welding portion 2322; and the first V-shaped notch 4011 and the second V-shaped notch 4012 are configured to move relative to each other to clamp the connecting portion 2323, so that the first end cover assembly 231 and the second end cover assembly 232 are aligned.

During the production process of the battery cell 20, the welding portion 2322 is usually placed at one end of the combined member. Then, a position to be welded on the welding portion 2322 is welded to the tab or the flattened tab of the electrode assembly 220. Finally, the connecting portion 2323 is bent so that the folded portion 2321 is folded 180° to cover another end of the combined member. Electrode terminals and other electrical connection components are usually provided on the folded portion 2321. Compared with the folded portion 2321 with a more complex structure and the welding portion 2322 with a welding region, the connecting portion 2323 usually has higher mechanical strength.

Based on this, in this embodiment, the deviation correction mechanism 401 corrects the deviation by clamping the connecting portion 2323, which can reduce the possibility of deformation of the second end cover assembly 232 during the deviation correction process and help improve the product yield rate of the battery.

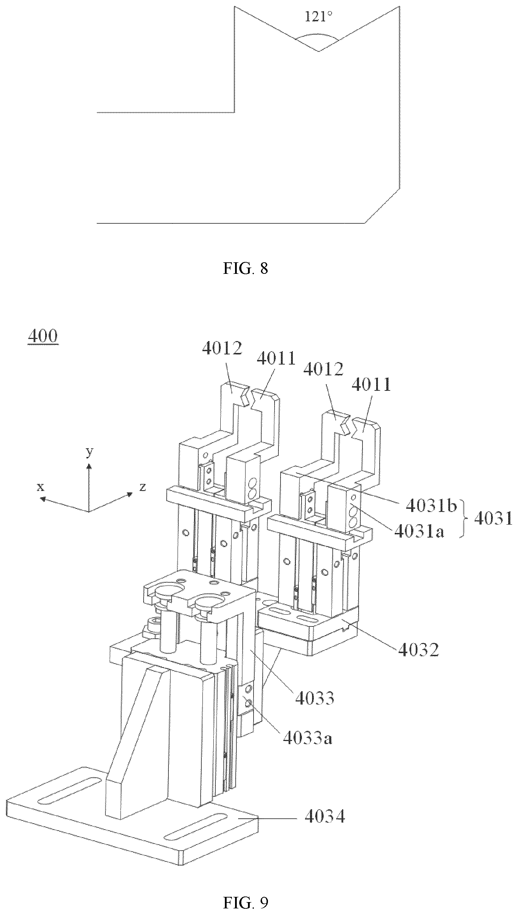

FIG. 8 is a schematic structural diagram of a V-shaped notch according to an embodiment of this application.

As shown in FIG. 8, in one embodiment, an included angle of the first V-shaped notch and/or the second V-shaped notch is 110° to 130°, preferably 121°.

Specifically, the included angle of the first V-shaped notch 4011 and the included angle of the second V-shaped notch 4012 may be the same or different. In a preferred embodiment, the included angle of the first V-shaped notch 4011 and the included angle of the second V-shaped notch 4012 are the same. Based on the deviation of the combined member on the production line, through multiple dynamic calculations by software, the included angle of the first V-shaped notch 4011 and the included angle of the second V-shaped notch 4012 are set to 110° to 130°, which can achieve the largest deviation correction range and the best deviation correction effect.

In another embodiment, the included angle range of the first V-shaped notch 4011 and the second V-shaped notch 4012 may also be set based on the type and size of the battery cell 20. For example, when the size and mass of the battery cell 20 are relatively large, the deviation angle of the combined member is relatively small, in this case, the included angle of the first V-shaped notch 4011 and the included angle of the second V-shaped notch 4012 may be set to an acute angle.

In one embodiment, roughness of a surface of the first V-shaped notch 4011 in contact with the second end cover assembly 232 is smaller than roughness of another surface of the first V-shaped notch 4011; and/or roughness of a surface of the second V-shaped notch 4012 in contact with the second end cover assembly 232 is smaller than roughness of another surface of the second V-shaped notch 4012.

Specifically, surfaces of the first V-shaped notch 4011 and the second V-shaped notch 4012 that are in contact with the second end cover assembly 232 may be polished, so that roughness of the surfaces in contact with the second end cover assembly 232 is smaller than roughness of other surfaces of the deviation correction mechanism 401. It should be understood that roughness of the surface of the first V-shaped notch 4011 in contact with the second end cover assembly 232 can be the same as or different from roughness of the surface of the second V-shaped notch 4012 in contact with the second end cover assembly 232. In a preferred embodiment, the two have the same roughness, which facilitates processing. In one embodiment, it may be that only the surface of the first V-shaped notch in contact with the second end cover assembly 232 is polished. In another embodiment, it may be that only the surface of the second V-shaped notch in contact with the second end cover assembly 232 is polished.

In this embodiment, through the increasing of smoothness of the surface of the V-shaped notch in contact with the second end cover assembly 232, it is possible to avoid jamming between the second end cover assembly 232 and the V-shaped notch when the two are in contact during the clamping and deviation correction process. This further reduces the likelihood of deformation of the second end cover assembly 232 during the deviation correction process, thereby helping to improve the product yield rate of the battery cell 20.

In another embodiment, the V-shaped notch may also be replaced with a U-shaped notch or other structures that can perform clamping and deviation correction.

FIG. 9 is another schematic structural diagram of a deviation correction device 400 according to an embodiment of this application.

In one embodiment, as shown in FIG. 9, the moving mechanism 403 includes a first moving module 4031, where the first moving module 4031 is connected to the deviation correction mechanism 401, and the first moving module 4031 is configured to move in a first direction x so that the first V-shaped notch 4011 and the second V-shaped notch 4012 move relative to each other.

Specifically, in the embodiment as shown in FIG. 9, the first moving module 4031 may include a first moving sub-module 4031a and a second moving sub-module 4031b, where the first moving sub-module 4031a is connected to the first V-shaped notch 4011, and the second moving sub-module 4031b is connected to the second V-shaped notch 4012. Thus, the movement of the first moving sub-module 4031a can drive the first V-shaped notch 4011 to move toward the second V-shaped notch 4012, and the movement of the second moving sub-module 4031b can drive the second V-shaped notch 4012 to move toward the first V-shaped notch. The two V-shaped notches move relative to each other with the movement of the first moving module 4031, gradually approaching, thereby implementing clamping and deviation correction of the second end cover assembly 232 placed between the two V-shaped notches.

In another embodiment, the first moving module 4031 may be a single moving module, and the first moving module 4031 is connected to the first V-shaped notch 4011 or the second V-shaped notch 4012. When the first moving module 4031 is connected to the first V-shaped notch 4011, the movement of the first moving module 4031 drives the first V-shaped notch 4011 to move toward the second V-shaped notch 4012, reducing a distance between the two V-shaped notches, thereby implementing clamping and deviation correction of the second end cover assembly 232. When the first moving module 4031 is connected to the second V-shaped notch 4012, the movement of the first moving module 4031 drives the second V-shaped notch 4012 to move toward the first V-shaped notch 4011, reducing the distance between the two V-shaped notches, thereby implementing clamping and deviation correction of the second end cover assembly 232.

In other words, in this embodiment, a position of one of the first V-shaped notch 4011 and the second V-shaped notch 4012 may be fixed. The first moving module 4031 moves another V-shaped notch to cause relative displacement between the first V-shaped notch 4011 and the second V-shaped notch 4012.

In a more specific embodiment, the first moving module 4031 may have a cylinder structure. The first moving sub-module 4031a and the first V-shaped notch together form a V-shaped pneumatic gripper, and the second moving sub-module 4031b and the second V-shaped notch together form another V-shaped pneumatic gripper.

In one embodiment, the moving mechanism 403 includes a second moving module 4032, where the second moving module 4032 is connected to the first moving module 4031, and the second moving module 4032 is configured to move in the first direction x to control a position of the first moving module 4031 in the first direction x.

Specifically, still referring to FIG. 9, the second moving module 4032 may have a slot hole as shown in FIG. 9. Fasteners such as screws or rivets (not shown in the figure) pass through the slot hole so that the second moving module 4032 can move in the first direction x within the range shown by the slot hole. After moving to the required position, it is fixed by the fasteners. For example, the second moving module 4032 may be in the form of a slider and a slide rail, the slide rail being disposed in the first direction x. The second moving module 4032 moves along the first direction x, driving the first moving module 4031 disposed on it and the deviation correction mechanism 401 connected to the first moving module to move along the first direction x, so that the deviation correction mechanism 401 can move forward and backward relative to the direction in which the combined member is transported.

In one embodiment, the moving mechanism 403 includes: a third moving module 4033, where the third moving module 4033 is connected to the second moving module 4032, and the third moving module 4033 is configured to move in a second direction y to control a position of the second moving module 4032 in the second direction y, the second direction y being perpendicular to the first direction x.

Specifically, as shown in FIG. 9, the third moving module 4033 of the moving mechanism 403 can move along the second direction y, driving the second moving module 4032 disposed on it, the first moving module 4031, and the deviation correction mechanism 401 connected to the first moving module 4031 to together move along the second direction y, so that the deviation correction mechanism 401 can move up and down relative to the direction in which the combined member is transported.

In one embodiment, the moving mechanism 403 includes a fourth moving module 4034, where the fourth moving module 4034 is connected to the third moving module 4033, and the fourth moving module 4034 is configured to move in a third direction z to control a position of the third moving module 4033 in the third direction z, the third direction z being perpendicular to the first direction x and the second direction y.

Specifically, as shown in FIG. 9, the fourth moving module 4034 may adopt a structure similar to the structure of the second moving module. The fourth moving module 4034 of the moving mechanism 403 can move along the third direction Z, driving the third moving module 4033 disposed on it, the second moving module 4032, the first moving module 4031, and the deviation correction mechanism 401 connected to the first moving module 4031 to together move along the third direction z, thereby driving the deviation correction mechanism 401 to move left and right relative to the direction in which the combined member is transported.

It should be understood that the moving mechanism 403 can include all four of the above-mentioned moving modules 403 simultaneously, or it can include only the first moving module 4031. It can also include the first moving module 4031 and at least one of the other three moving modules. In the above embodiment, the second moving module 4032, the third moving module 4033, and the fourth moving module 4034 being discrete moving modules is used as an example. These three moving modules may also be an integral moving module that can implement movement in all three directions simultaneously.

In this embodiment, through the provision of moving modules in multiple directions, the positions of the deviation correction mechanism 401 in the first direction x, the second direction y, and the third direction z can be accurately controlled through the moving modules in different directions. In other words, the deviation correction mechanism 401 is controlled to move forward and backward, up and down, and left and right relative to the combined member. This enables the deviation correction mechanism 401 to further adapt to different types of batteries for position adjustment and accurately clamp the second end cover assembly 232 for clamping and deviation correction, effectively improving the deviation correction effect of the deviation correction device 400 and flexibility of the deviation correction device 400.

In a more specific embodiment, the third moving module 4033 has a cylinder structure, where the cylinder structure is provided with a limiting portion 4033a and the limiting portion 4033a is configured to control a maximum distance a cylinder moves in the second direction y.

In other words, providing the third moving module 4033, which controls vertical movement, in the form of a cylinder helps the deviation correction mechanism 401 to quickly rise and fall in the second direction y, enabling the deviation correction mechanism 401 to quickly rise when deviation correction is required and quickly fall back after completing the deviation correction operation. Additionally, the limiting portion can be used to control the maximum distance the cylinder moves in the second direction y, thereby accommodating different types of battery cells 20.

In one embodiment, the deviation correction device 400 includes a control mechanism, where the control mechanism is connected to the moving mechanism 403.

Specifically, the control mechanism is configured to control the moving mechanism 403 to move to reposition the deviation correction mechanism 401 at the welding station of the first end cover assembly 231. The control mechanism can respectively control different moving modules to move to the corresponding position. This improves the automation level of the deviation correction device 400.

In one embodiment, the control mechanism includes a pressure regulating valve, where the pressure regulating valve is configured to adjust a pressure between the first V-shaped notch 4011 and the second V-shaped notch 4012 and the second end cover assembly 232 when the first V-shaped notch 4011 and the second V-shaped notch 4012 are fixing the second end cover assembly 232.

Specifically, the clamping pressure of the first V-shaped notch 4011 and the second V-shaped notch during clamping and deviation correction can be set through the pressure regulating valve, which can effectively reduce the possibility that the deviation correction mechanism 401 injures the connecting portion 2323 of the second end cover assembly 232 during the clamping and deviation correction performed by the deviation correction mechanism 401.

In this embodiment, through the controlling of the pressure of the deviation correction mechanism 401 during clamping and deviation correction through the pressure regulating valve, the possibility of deformation of the second end cover assembly 232 during the deviation correction process can be further reduced, thereby helping to improve the product yield rate of the battery cell 20.

As shown in FIG. 9, in one embodiment, the deviation correction device 400 includes a plurality of deviation correction mechanisms 401, and the plurality of deviation correction mechanisms 401 are arranged in the first direction x.

Specifically, a plurality of deviation correction mechanisms 401 may be provided in one deviation correction device 400 and arranged along the first direction x, and the plurality of deviation correction mechanisms can work simultaneously, allowing for deviation correction of a plurality of combined members, which are each welded with the second end cover assembly 232, transported to the processing station of the first end cover assembly 231, greatly improving the deviation correction efficiency of the deviation correction device 400 and increasing the production efficiency of the battery cell 20.

Optionally, an even number of deviation correction mechanisms 401 are provided in the deviation correction device 400. Taking the deviation correction device 400 being provided with two deviation correction mechanisms 401 as an example, providing two deviation correction mechanisms 401 helps to improve the deviation correction efficiency of the deviation correction device 400; and in addition, even if there is only one battery cell 20 transported to the welding station of the first end cover assembly 231, the redundant deviation correction mechanism ensures that deviation correction can be performed on the combined member regardless of which welding station it is transported to. This guarantees that the combined member will be corrected before being welded with the first end cover assembly 231, thus improving the reliability of the deviation correction device 400.

In one embodiment, the deviation correction device 400 includes a plurality of moving mechanisms 403 corresponding to the plurality of deviation correction mechanisms 401. The plurality of moving mechanisms 403 are fixed to the fixing mechanism 402 in the first direction x.

Specifically, when the deviation correction device has a plurality of deviation correction mechanisms 401, it can have a same number of moving mechanisms 403, and the plurality of moving mechanisms 403 are fixed to the same fixing mechanism 402.

In one embodiment, the same number of moving mechanisms 403 may be the same number of first moving modules 4031. In another embodiment, the same number of moving mechanisms 403 may be the same number of first moving modules 4031 and the same number of second moving modules 4032.

In one embodiment, the deviation correction device 400 includes a plurality of moving mechanisms 403 corresponding to a plurality of deviation correction mechanisms 401 and a plurality of fixing mechanisms 402 corresponding to a plurality of moving mechanisms 403. The plurality of fixing mechanisms 402 are arranged along the first direction x at the welding station of the first end cover assembly 231.

Specifically, when the deviation correction device has a plurality of deviation correction mechanisms 401, it can also have the same number of fixing mechanisms 402 and the same number of moving mechanisms 403. The deviation correction mechanisms 401, the fixing mechanisms 402, and the moving mechanisms 403 have a one-to-one correspondence.

Embodiments of this application further provide a processing apparatus, where the processing apparatus includes a first welding device and the deviation correction device 400.

In one embodiment, the processing apparatus includes a second welding device and a transport device.

The first welding device is configured to weld a first end cover assembly 231 at a welding station of the first end cover assembly 231; the second welding device is configured to weld the second end cover assembly 232 at a welding station of the second end cover assembly 232; the transport device is configured to transport the combined member to the welding station of the second end cover assembly 232 and the welding station of the first end cover assembly 231; and the deviation correction device 400 is configured to correct a deviation of the second end cover assembly 232 at the welding station of the first end cover assembly 231.

In one embodiment, the deviation correction device 400 includes a deviation correction mechanism 401, a fixing mechanism 402, and a moving mechanism 403. The deviation correction mechanism 401 is disposed at the welding station of the first end cover assembly 231, and the deviation correction mechanism 401 is configured to correct a deviation of the combined member welded with the second end cover assembly 232. The fixing mechanism 402 is configured to fix the deviation correction mechanism 401 to the welding station of the first end cover assembly 231. The moving mechanism 403 is disposed on the fixing mechanism 402, the deviation correction mechanism 401 is disposed on the moving mechanism 403, and the moving mechanism 403 is configured to reposition the deviation correction mechanism 401 at the welding station of the first end cover assembly 231.

In summary, embodiments of this application provide a deviation correction device 400 for a cylindrical battery and a processing apparatus. The deviation correction device 400 can correct a deviation of a combined member before the combined member is welded with a second end cover assembly, and after the deviation correction is completed, the combined member does not need to undergo other processes but directly proceeds to the welding of the second end cover assembly. This effectively avoids the deviation caused by transferring the combined member and solves the problem of misalignment between a first end cover assembly 231 and the second end cover assembly 232 caused by the deviation of the combined member when welding the second end cover assembly, thereby improving the product yield rate of the battery cell 20.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A deviation correction device (400) for a cylindrical battery, **characterized in that** the deviation correction device (400) comprises:
a deviation correction mechanism (401), wherein the deviation correction mechanism (401) is disposed at a welding station of a first end cover assembly (231), and the deviation correction mechanism (401) is configured to correct a deviation of a combined member welded with a second end cover assembly (232), so that the first end cover assembly (231) is welded to an electrode assembly (220) of the combined member, for which the deviation has been corrected, at the welding station of the first end cover assembly (231), wherein the combined member comprises the electrode assembly (220) and a housing (210).

2. The deviation correction device (400) according to claim 1, **characterized in that** the deviation correction mechanism (401) corrects the deviation of the combined member by correcting a deviation of the second end cover assembly (232).

3. The deviation correction device (400) according to claim 1 or 2, **characterized in that** the deviation correction device (400) comprises:
a moving mechanism (403), wherein the deviation correction mechanism (401) is disposed on the moving mechanism (403), and the moving mechanism (403) is configured to reposition the deviation correction mechanism (401) at the welding station of the first end cover assembly (231).

4. The deviation correction device (400) according to any one of claims 1 to 3, **characterized in that** the deviation correction device (400) comprises:
a fixing mechanism (402), wherein the moving mechanism (403) is disposed on the fixing mechanism (402), and the fixing mechanism (402) is configured to fix the deviation correction mechanism (401) to the welding station of the first end cover assembly (231).

5. The deviation correction device (400) according to any one of claims 1 to 4, **characterized in that** the deviation correction mechanism (401) comprises:
a first clamping portion and a second clamping portion, wherein the first clamping portion is disposed opposite the second clamping portion.

6. The deviation correction device (400) according to claim 5, **characterized in that** the first clamping portion comprises a first V-shaped notch (4011); and the second clamping portion comprises a second V-shaped notch (4012), the first V-shaped notch (4011) being disposed opposite the second V-shaped notch (4012); wherein
the first V-shaped notch (4011) and the second V-shaped notch (4012) are configured to move relative to each other to fix the second end cover assembly (232) between the first V-shaped notch (4011) and the second V-shaped notch (4012).

7. The deviation correction device (400) according to any one of claims 1 to 6, **characterized in that** the second end cover assembly (232) comprises a folded portion (2321), a welding portion (2322), and a connecting portion (2323), wherein the welding portion (2322) is configured to be welded to the electrode assembly (220), and the connecting portion (2323) is configured to connect the folded portion (2321) to the welding portion (2322); and
the first V-shaped notch (4011) and the second V-shaped notch (4012) are configured to move relative to each other to clamp the connecting portion (2323), so that the first end cover assembly (231) and the second end cover assembly (232) are aligned.

8. The deviation correction device (400) according to claim 6, **characterized in that** an included angle of the first V-shaped notch (4011) is 110° to 130° and/or an included angle of the second V-shaped notch (4012) is 110° to 130°.

9. The deviation correction device (400) according to claim 6, **characterized in that** roughness of a surface of the first V-shaped notch (4011) in contact with the second end cover assembly (232) is smaller than roughness of another surface of the first V-shaped notch (4011); and/or
roughness of a surface of the second V-shaped notch (4012) in contact with the second end cover assembly (232) is smaller than roughness of another surface of the second V-shaped notch (4012).

10. The deviation correction device (400) according to any one of claims 3 to 9, **characterized in that** the moving mechanism (403) comprises:
a first moving module (4031), wherein the first moving module (4031) is connected to the deviation correction mechanism (401), and the first moving module (4031) is configured to move in a first direction so that the first V-shaped notch (4011) and the second V-shaped notch (4012) move relative to each other, wherein the first direction is a direction along which the combined member is transported.

11. The deviation correction device (400) according to claim 10, **characterized in that** the moving mechanism (403) comprises:
a second moving module (4032), wherein the second moving module (4032) is connected to the first moving module (4031), and the second moving module (4032) is configured to move in the first direction to control a position of the first moving module (4031) in the first direction.

12. The deviation correction device (400) according to claim 11, **characterized in that** the moving mechanism (403) comprises:
a third moving module (4033), wherein the third moving module (4033) is connected to the second moving module (4032), and the third moving module (4033) is configured to move in a second direction to control a position of the second moving module (4032) in the second direction, the second direction being perpendicular to the first direction.

13. The deviation correction device (400) according to claim 12, **characterized in that** the moving mechanism (403) comprises:
a fourth moving module (4034), wherein the fourth moving module (4034) is connected to the third moving module (4033), and the fourth moving module (4034) is configured to move in a third direction to control a position of the third moving module (4033) in the third direction, the third direction being perpendicular to both the first direction and the second direction.

14. The deviation correction device (400) according to claim 11 or 12, **characterized in that** the third moving module (4033) comprises a cylinder structure, wherein the cylinder structure is provided with a limiting portion (4033a), and the limiting portion (4033a) is configured to control a maximum distance a cylinder moves in the second direction.

15. The deviation correction device (400) according to any one of claims 1 to 14, **characterized in that** the deviation correction device (400) comprises:
a control mechanism, wherein the control mechanism is connected to the moving mechanism (403).

16. The deviation correction device (400) according to claim 15, **characterized in that** the control mechanism comprises:
a pressure regulating valve, wherein the pressure regulating valve is configured to adjust a pressure between the first V-shaped notch (4011) and the second V-shaped notch (4012) and the second end cover assembly (232) when the first V-shaped notch (4011) and the second V-shaped notch (4012) are fixing the second end cover assembly (232).

17. A processing apparatus, **characterized in that** the processing apparatus comprises:
a first welding device, configured to weld a first end cover assembly (231) at a welding station of the first end cover assembly (231); and
the deviation correction device (400) according to any one of claims 1 to 16, configured to correct the deviation of the combined member at the welding station of the first end cover assembly (231), wherein the combined member comprises the electrode assembly (220) and the housing (210).

18. The processing apparatus according to claim 17, **characterized in that** the processing apparatus comprises:
a second welding device, configured to weld the second end cover assembly (232) at a welding station of the second end cover assembly (232); and
a transport device, configured to transport the combined member to the welding station of the second end cover assembly (232) and the welding station of the first end cover assembly (231) in sequence.
